# EUROPEAN PATENT APPLICATION

(11) **EP 4 852 310 A1**
(43) Date of publication of application: **09.12.2026**
(21) Application number: 24921881.9
(22) Date of filing: 29.01.2024
(51) Int. Cl.: H02S 20/10, H02S 20/24, F24S 25/11, B65D 43/02

(54) **BALLASTED SUPPORT FOR SOLAR INSTALLATIONS**

(71) Applicant: Landatu Solar S.L, 48001 Bilbao (Bizkaia) (ES)
(72) Inventor: MARTÍN BÁEZ, Cristian Javier, 48001 Bilbao (ES)
(74) Representative: Ezcurra Zufia, Maria Antonia
(86) International application number: PCT/ES2024/070047
(87) International publication number: WO 2025/163214

(57) **Abstract**

The present invention relates to a ballasted support for solar installations, in particular for photovoltaic solar modules used on flat roofs or surfaces, in which water or any other material is used for ballasting. The present invention is characterised by the particular design and configuration of each and every one of the elements forming part of the support of the application, thereby producing an easily transportable support that can be assembled quickly and simply.

## Description

### SUBJECT OF THE INVENTION

The subject of the present invention, as established in the title of the invention, is a ballasted mount for solar installations, in particular for solar photovoltaic modules to be used on roofs or flat surfaces, in which the means of ballasting is water or any other material.

The present invention is characterised by the special design and configuration of all elements that comprise the mount that forms the subject of the patent application, in such a way as to achieve a mount that allows for fast and easy assembly, that is easy to transport because its component parts are stackable, with a very low weight, that is ballasted with water or other materials such as gravel, sand, concrete or aggregates in general and that does not require the drilling of holes in the roof, where said mount not only offers a support surface for the solar modules but also an anchorage surface.

The present invention therefore relates to support structures for solar photovoltaic installations and more particularly, to ballasted solar photovoltaic installations.

### BACKGROUND TO THE INVENTION

In recent years, there has been a major growth in solar photovoltaic energy. Solar photovoltaic systems can be installed on all kinds of surfaces, such as roofs, canopies, shelters, flat/terraced roofs and even on water surfaces.

Generally speaking, installations on roofs or decks are made by attaching metal structures or metal sections that are bolted to the roof itself, onto which the solar modules are bolted or attached.

The principal problem of such an arrangement, however, is that, for a great variety of reasons, there are a large number of roofs onto which it is not possible to make such a mechanical attachment or to drill into and/or perforate the roof. This may be due to the fact that the roofing membrane or coatings might be damaged and cause leakage or damp, or because the roof is covered with something that prevents or hinders such an attachment, such as gravel, water, earth, etc.

On flat walkable roofs of this kind, the most common solution adopted to date has been to employ ballasted mounts, where weight is simply added to a mount onto which the photovoltaic module is attached, so that the installation can withstand gusts of wind, making it unnecessary to drill into the roof. The photovoltaic modules are placed on these mounts and counterbalanced in some way, using concrete slabs or a similar element that provides weight.

The most common ballasted solutions in the industry are those that consist of a metal structure that incline the solar module, and weight is placed on this structure using trays or by some other means. There are also concrete mounts with a specific incline on which the photovoltaic modules can be placed directly, comprising a relatively simple form of self-ballasting. The main problem with this type of solution lies in the difficulty of transporting the heavy concrete blocks used for ballast, which makes installation difficult and increases the time required to complete the work, as well as causing injury to the personnel involved. Another disadvantage of concrete mounts is that they are very brittle and can break easily during transport or installation, and that they require auxiliary elements such as cranes to lift them onto the roof.

There are also other solutions, such as plastic mounts that are ballasted with concrete slabs. There are other variants of this concept of a ballasted plastic mount, such as that described in Patent WO2010/054795 A1 which relates to an L-shaped mount that is ballasted with stones or similar.

However, there are no known means in the state of the art of the industry that combine multiple functions and solve several of the problems of the current ballasted mounts for photovoltaic modules on flat rooftops; i.e. the mount allows for easy installation, is easy to transport, has a low weight, can be quickly ballasted with water or any other material without impairing its ballasting capacity, does not require holes to be drilled in the roof, developing a mount for roofs such as that described below. This is the subject of the present application, the essential characteristics of which are set forth in the first claim.

### DESCRIPTION OF THE INVENTION

The subject of the present invention is set forth in its essence in the independent claim, and the various embodiments are set forth in the dependent claims.

The present invention relates to a ballasted mount for photovoltaic modules comprising two separate parts, a base and a lid, in which the lid can be attached to the base and each of the two can be fitted to form stacks of bases and lids fitted one inside the others. The base takes the shape of a parallelepiped, open at the top, which is complemented by a lid with a perimeter corresponding to that of the base thereof, in such a way that, once the lid is fixed on the base, the mount is formed and a watertight interior volume is defined which can be filled through a hole or nozzle, preferentially situated in the lid.

The lid and base may be joined to one another by any known means of connection such as flanges, bolts, screws, or any mechanical connection that can be opened or closed or by clipping, fitting, or pressure. In a preferred, but in no way restrictive, embodiment, this can be done by means of folding tabs provided on the perimeter of the lid with openings into which there fit, when pressed, protrusions provided on the base or on the element complementary to that containing the tabs.

The base may have any geometric shape but shall preferentially have certain recesses or folds to provide the base with greater structural resistance to compressive stresses.

The lid may be provided with a first raised projection with a first inclined surface at the top so that when the photovoltaic module is placed on it, the module is attached at an inclination to the panel to optimise the energy generated. The lid has a second raised projection at a distance from the first, with a second inclined surface at the top, so that it is coplanar with the first inclined surface. In order to attach the photovoltaic module to the mount, the lid has at least one pair of holes in each of the inclined surfaces, and in a preferred embodiment, these holes have embedded nuts compatible with the most common systems of connection or parts in the solar photovoltaic industry. Furthermore, in order to facilitate mounting of the photovoltaic module on the mount, the lid may be provided with projections or crenellations at the end of the second inclined surface, so that when the module is placed on the mount, they serve as a stop and thus prevent the module from sliding on the mount, as well as providing a support point for the module on the mount that serves to align the different modules of the installation for mounting the photovoltaic module horizontally and vertically.

The mount, lid and base are preferably made of any plastic material (PE, HDPE, PP, PVC, PA) or other composite materials, preferably high-density polyethylene

The aforesaid characteristics achieve
- Quick and easy assembly of both the mounts and the solar installation.
- Ease and optimisation in transporting the mounts.
- Very low weight for easy installation.
- Ballasting with water or other common materials.
- Great durability of the mount.
- Compatible for large panel sizes and different mounting positions.

Unless otherwise stated, all technical and scientific elements used in this specification have the meaning habitually understood by a person skilled in the art to which this invention pertains. In the practice of the present invention, similar or equivalent procedures and materials to those described in the record can be used.

Throughout the description and the claims, the words 'contains' or 'comprises' and its variants are not intended to exclude other technical characteristics, additives, components or steps. For experts in the field, other objects, advantages and characteristics of the invention will emerge partly from the description and partly from practice with the invention.

### DESCRIPTION OF FIGURES

To complete the description made herein and in order better to aid understanding of the characteristics of the invention, in accordance with a preferential example of a practical embodiment thereof, this description is accompanied by a set of drawings showing as follows in indicative, but not restrictive terms.
Figure 1 shows the two parts, lid and base, respectively, that comprise the mount.
Figure 2 shows how the lid and the base comprising the mount are stackable
Figure 3 is a perspective representation of the mount when closed.
Figure 4 is a perspective view of the mount with a photovoltaic module fitted to it.
Figure 5 is a perspective view of several photovoltaic modules fitted on a series of ballasted mounts.
Figure 6 is a side view of the mount with a solar module fitted.
Figure 7 is a perspective view of the connection between the mount and the panel in the case of a mount located at the end of the solar module or end of the line of modules.
Figure 8 is a perspective view of the front connection between two adjacent solar modules and the mount.
Figure 9 is a detail of the rear of the ballasted mount with the filling hole.

### PREFERRED EMBODIMENT OF THE INVENTION.

As shown in the figures, one preferred embodiment of the proposed invention is described below.

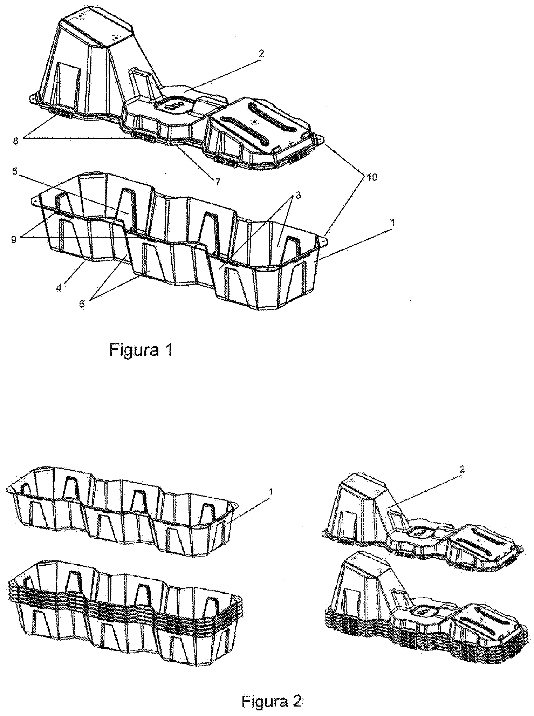

Figure 1 shows the ballasted mount that is the subject of the invention which, as can be seen, comprises a base (1) and a lid (2) which can be joined together in such a way that they can be removed, and which comprise the ballasted mount that is the subject of the invention. In accordance with Figure 2, the two separate parts are stackable in such a way as to facilitate transport and reduce the associated costs, since both the bases and the lids have a general truncated cone arrangement that makes it easy to fit the bases into one another and the lids into other lids.

The base (1) is shaped like a parallelepiped, open at the top, bounded by the side walls (3) and the bottom surface (4), comprising an inner volume (5) that can be filled with water, sand, stone or any other material. Thus, it has a geometry in the form of an open container at the top, preferably with non-straight walls, with a series of recesses or folds (6) to provide the base with greater capacity and structural resistance to compressive stresses.

To form the mount that is the subject of the invention, the lid (2) is fitted onto the base (1) which has a complementary perimeter, wherein the lid (2) is provided with a seal (7) along the entire perimeter to facilitate the closure of the lid on the base and to ensure the watertightness of the interior volume (5), formed by the inner part of the base and lid.

In the embodiment shown, for closure of the lid (2) on the base (1), the lid is provided with a series of projecting and folding tabs (8) arranged along the edges of the lid with grooves into which snap-on protrusions (9) are fitted, arranged perimetrically on the upper edge of the base (1) and coinciding with the grooves of the protruding and folding tabs (8). Additionally, the lid (2) and the base (1) have lugs (10) in the corners and centre top enable them to be mechanically attached using screws, flanges or similar elements.

In addition, on the lid (2) there is a perforation or hole (11) that allows access to the closed inner volume (5), into which a stopper can be fitted.

The lid (2) also has a first raised projection (13) at the rear with a first inclined surface (15) at the top, and a second raised projection (16) at the front with a second inclined surface (17) at the top, the height of the first projection (13) and of the second projection being such that the first inclined surface (15) and the second inclined surface (15) are coplanar and have a height that allows the panels to be placed on said inclined surfaces of the projections at an incline with a suitable incline to optimise the solar production of the modules and maximise solar gain.

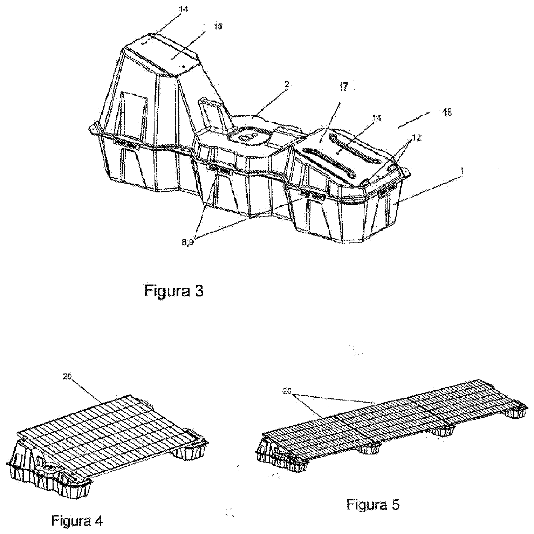

Also, on the front part of the lid (2), on the second inclined surface of the second protrusion, there are protrusions (12) which serve as a stop for the lower edge of the solar panels (20), and which facilitate the assembly and alignment of the solar modules on the mount (Figures 4, 5 and 6).

On the lid (2), on both the first inclined surface (15) and the second inclined surface (17) there is at least one pair of holes that preferably have embedded nuts (14) for screwing or for fixing the mount and the photovoltaic module (20), for which the most common mounting clips (30) in the industry may be used.

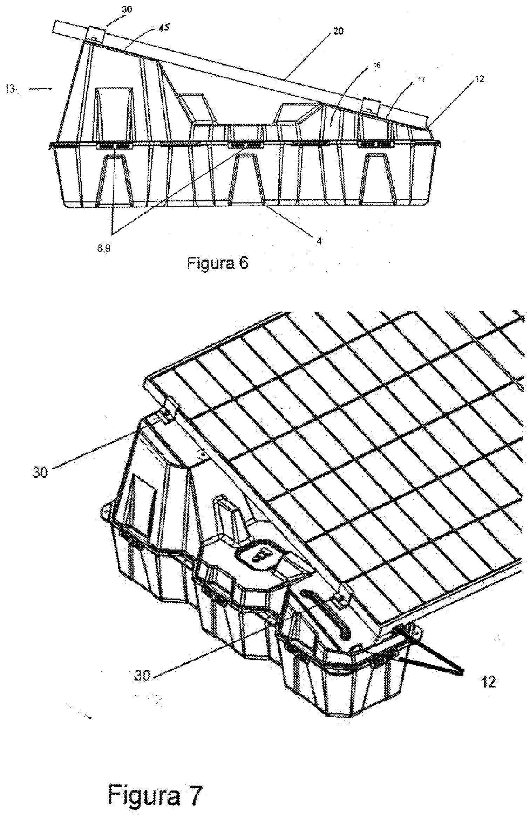

Figure 6 shows a side view of the mount with a solar module fitted, showing how the projecting and folding tabs (8) retain the lid (2) on the base (1) and how a photovoltaic module (20) is arranged at an angle to the horizontal and attached on the ballasted mount. It should also be noted how the lower edge of the photovoltaic panels (20) butt against the protrusions (12) at the front end of the lid (2).

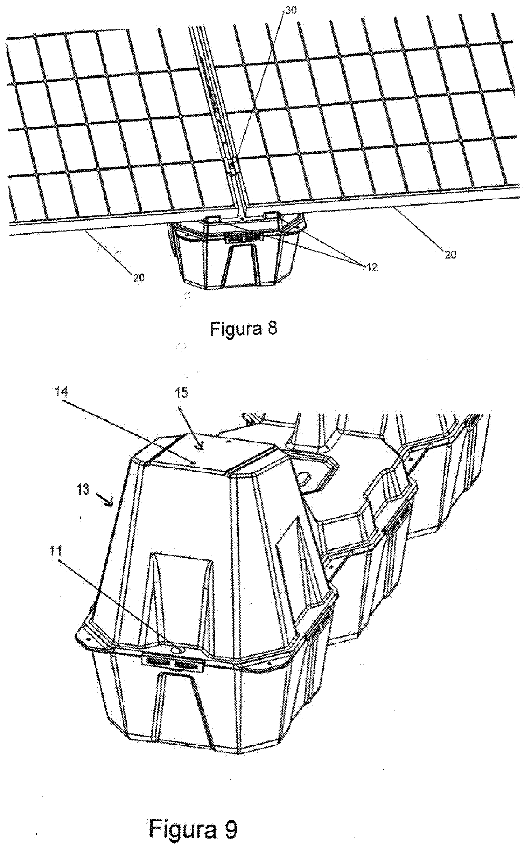

Figure 8 clearly shows how the same mount is shared by adjacent solar panels (20), so that the two protrusions (12) of each ballasted mount is used by each of the photovoltaic panels (20). It can also be seen how the connection pieces used in the solar industry consist of mounting clips (30) that are used for bolting into the embedded nuts of the mount (14) and fastening and attaching the panel to the mount.

The nature of the present invention and the means of implementing it having been sufficiently described, it is noted that within the same essentiality, it may be made in other embodiments differing in detail from that indicated herein as an example, and to which the protection obtained shall equally extend, provided that it does not alter, change or modify its basic principle.

## Claims

1. Ballasted mount for roofs or flat surfaces **characterised in that** it comprises a base (1) in the form of a receptacle open at the top on which a lid (2) or top is attached in such a manner that it may be released, where both the base (1) and the lid (2) are arranged in such a way as to allow the bases (1) to be fitted together and the lids (1) to be fitted together, where the lid (2) has a first raised projection on its rear part (13), the upper part of which has a first inclined surface (15), the front part of which has a second raised projection (16), the upper part of which has a second inclined surface (17), the height of the first projection (13) and of the second projection (16) being such that the first inclined surface (15) and the second inclined surface (17) are coplanar, the front part of the second inclined surface (17) having protrusions (12); whereby once the lid (2) has been attached to the base (1), an interior volume (5) is defined that can be filled through a hole or perforation (11) in the lid, where the connection between the lid (2) and the base (1) is by any releasable connecting means.

2. Ballasted mount for roofs or flat surfaces in accordance with Claim 1, **characterised in that** the releasable means of connecting consist of a series of projecting and folding tabs (8) arranged on the edges of the covers (1), said projecting and folding tabs (8) being provided with grooves into which snap-on protrusions (9) fit, arranged perimetrically on the upper edge of the base (1) and coinciding with the grooves of the projecting and folding tabs (8).

3. Ballasted mount for roofs or flat surfaces in accordance with Claim 2, **characterised in that** on the lid (2), both in the first inclined surface (15) and in the second inclined surface (17) there is at least one pair of perforations.

4. Ballasted mount for roofs or flat surfaces in accordance with Claim 3, **characterised in that** one of said perforations has an embedded nut (14).

5. Ballasted mount for roofs or flat surfaces in accordance with any of the above claims, **characterised in that** the ballasting is by means of water or any other fluid that can be filled through an orifice or nozzle (11) in the lid.

6. Ballasted mount for roofs or flat surfaces in accordance with any of the above claims, **characterised in that** the lid (2) has a seal (7) along its perimeter to facilitate closure of the lid (2) on the base (1).

7. Ballasted mount for roofs or flat surfaces in accordance with any of the previous claims, **characterised in that** the base (1) has a geometry in the form of a container open at the top, preferably with non-straight walls, with a truncated cone shape with a series of recesses and folds (6).

8. Ballasted mount for roofs or flat surfaces in accordance with any of the above claims, **characterised in that** it is made of high-density polyethylene plastic.
